# EUROPEAN PATENT APPLICATION

(11) **EP 2 436 498 A1**
(43) Date of publication of application: **04.04.2012**
(21) Application number: 10780328.0
(22) Date of filing: 23.02.2010
(51) Int. Cl.: B29C 39/10, B29C 39/42, B29C 39/44, B29C 65/48, B29C 65/78, G02B 3/00, B29K 101/10, B29L 11/00

(54) **METHOD FOR PRODUCING WAFER LENS, AND METHOD AND APPARATUS FOR PRODUCING WAFER LENS LAMINATE**

(30) Priority: 29.05.2009 JP 2009131044
(71) Applicant: Konica Minolta Opto, Inc., Hachioji-shi, Tokyo 192-8505 (JP)
(72) Inventor: SARUYA Nobuhiro, Hachioji-shi Tokyo 192-8505 (JP); EGURO Kouichi, Hachioji-shi Tokyo 192-8505 (JP)
(74) Representative: Henkel, Breuer & Partner
(86) International application number: PCT/JP2010/052730
(87) International publication number: WO 2010/137368

(57) **Abstract**

Disclosed is a method for producing a wafer lens, wherein misalignment between a glass substrate and a molding mold is suppressed from occurring. The method for producing a wafer lens comprises: a step wherein, in a first reduced pressure atmosphere, an energy-curable resin is arranged between a glass substrate (11) and a molding mold, and the glass substrate (11) is pressed against the molding mold, while sucking the glass substrate (11) and affixing the molding mold; a step wherein, in a second reduced pressure atmosphere that is under a higher pressure than the first reduced pressure atmosphere, the arrangement of the glass substrate (11) and the molding mold is adjusted while sucking the glass substrate (11) and affixing the molding mold; and a step wherein the energy-curable resin is cured by applying energy to the energy-curable resin, and the glass substrate (11) is released from the molding mold.

## Description

### TECHNICAL FIELD

The present invention relates to a method for manufacturing a wafer lens, a method for manufacturing a wafer lens assembly, and a method for manufacturing a wafer lens stacked body, and an apparatus for manufacturing a wafer lens, an apparatus for manufacturing a wafer lens assembly, and an apparatus for manufacturing a wafer lens stacked body.

### BACKGROUND ART

Conventionally, in the manufacturing field of an optical lens, a technique is studied so as to obtain an optical lens with high heat resistance by providing a lens portion composed of a curable resin to a glass substrate (for example, refer to Patent Document 1). As an example of methods for manufacturing an optical lens with the application of this technique, a method is proposed to dispose a plurality of optical lens portions composed of a curable resin on the surface of a glass substrate so as to form a so-called "a wafer lens" and thereafter to cut out the glass substrate for each lens portion.

One example of methods for manufacturing a wafer lens in the case of use of a light curable resin as the curable resin is explained briefly as follows. On the condition that a glass substrate is secured, a resin is dropped or discharged on the glass substrate (dispensing process). Then, the glass substrate is moved upward by toward a molding die arranged at an upper portion, and the resin is pressed on the molding die (imprinting process), The molding die is a light transmissive mold having a lens molding surface, and is held by and fixed on a stamp holder.

Subsequently, while the position of the glass substrate with a height is being held as it is, light is irradiated to the resin filled up in the cavities of the molding die from the upper portion of the molding die such that the resin is cured. Thereafter, while the glass substrate is being moved downward, the resin is released from the molding die (mold-releasing process). As a result, a wafer lens in which a plurality of lens portions is formed on the glass substrate can be manufactured.

### PRIOR ART DOCUMENT

### PATENT DOCUAMNT

Patent Document 1: Patent No. 3926380 official report

### SUMMARY OF THE INVENTION

### PROBLEMS TO BE SOLVED BY THE INVENTION

By the way, in the case where such lens portions are formed on a glass substrate, in order to form the lens portion with sufficient accuracy at a specified position on the glass substrate, the positioning of the molding die relative to the glass substrate becomes important. Further, problems arise in the if air bubbles are incorporate in the light curable resin in the course of manufacture of the lens portion to be formed, good optical properties cannot be acquired. Then, it may be considered that with the technique to conduct processes from the above dispensing process to the light irradiating process under the reduced pressure while securing the glass substrate by an "electrostatic chuck", especially to conduct the imprinting process under the reduced pressure, the lens portion is positioned with good accuracy, incorporation of air bubbles is prevented, and a lens portion is formed with good optical properties.

However, with the technique to secure the glass substrate by use ofsuch an electrostatic chuck, the holding power for the glass substrate is insufficient, and especially at the time of alignment (positioning) of a molding die to form a lens portion at a specified position on the glass substrate, positional deviation is occurred between the molding die and the glass substrate. Accordingly, it turns out that the above technique is insufficient for forming a lens required to have positional accuracy, such as an imaging lens. The above problems may arise in the case where a wafer lens is bonded with a spacer (i.e., a member to maintain a predetermined interval between a lens and other lenses in the case of stacking of a plurality of wafer lenses), and in the case where a wafer lens assembly in which wafer lenses are bonded with a spacer is bonded with another wafer lens assembly.

Then, fixing by suction may be considered. In this case of fixing, it is already understood that the holding power is sufficient in the fixing of lens and in the alignment as mentioned above. However, another problem may arise.

Namely, as mentioned above, the formation of lenses is preferably performed under a reduced pressure atmosphere in the point of prevention of incorporation of air bubbles. However, under such a situation, problem arises in that suctioning power decreases even with such fixing by suction and becomes insufficient.

Therefore, a main object of the present invention is to be able to suppress occurrence of positional deviation between a glass substrate and a molding die, and further to suppress positional deviation between a wafer lens and a spacer and positional deviation between wafer lens assemblies.

### MEANS FOR SOLVING THE PROBLEMS

According to one embodiment of the present invention, in a method of manufacturing a wafer lens in which lens portions made of energy curable resin are formed on a glass substrate, the method of manufacturing a wafer lens is characterized by being provided with a process of arranging the energy curable resin between the glass substrate and the molding die under a first atmosphere with the reduced pressure and pressing one of the glass substrate and the molding die to another one while suctioning the one of the glass substrate and the molding die; a process of changing the first atmosphere with a reduced pressure to a second atmosphere with a pressure higher than that of the first atmosphere in the state that the pressed one of the glass substrate and the molding die by the pressing process is in contact with the energy curable resin and conducting alignment between the glass substrate and the molding die while suctioning the one of the glass substrate and the molding die; and a process of applying energy to the energy curable resin so as to cure the energy curable resin.

According to another embodiment of the present invention, in a method of manufacturing a wafer lens assembly in which a wafer lens in which lens portions made of energy curable resin are formed on a glass substrate is bonded with an adhesive made of energy curable resin to a spacer which holds a predetermined distance between the wafer lens and another wafer lens, the method of manufacturing a wafer lens assembly is characterized by being provided with a process of arranging the energy curable resin between the wafer lens and the spacer under a first atmosphere with a reduced pressure and pressing one of the wafer lens and the spacer to another one while suctioning the one of the wafer lens and the spacer; a process of changing the first atmosphere with the reduced pressure to a second atmosphere with a pressure higher than that of the first atmosphere in the state that the wafer lens and the spacer are in contact with the adhesive by the pressing process and conducting alignment between the wafer lens and the spacer while suctioning the one of the wafer lens and the spacer; and a process of applying energy to the energy curable resin so as to cure the energy curable resin.

According to another embodiment of the present invention, in a method of manufacturing a wafer lens stacked body in which a wafer lens assembly which includes a wafer lens in which lens portions made of energy curable resin are formed on a glass substrate and a spacer which holds a predetermined distance between the wafer lens and another wafer lens is bonded with an adhesive made of energy curable resin and stacked on the another wafer lens across the spacer, the method of manufacturing a wafer lens stacked body is characterized by being provided with a process of arranging the energy curable resin between the wafer lens assembly and the another wafer under a first atmosphere with a reduced pressure and pressing one of the wafer lens assembly and the another wafer to another one while suctioning the one of the wafer lens assembly and the another wafer; a process of changing the first atmosphere with the reduced pressure to a second atmosphere with a pressure higher than that of the first atmosphere in the state that the spacer and the another wafer are in contact with the adhesive by the pressing process and conducting alignment between the wafer lens assembly and the another wafer while suctioning the one of the wafer lens assembly and the another wafer, and a process of applying energy to the energy curable resin so as to cure the energy curable resin.

It is desirable that the spacer and the lens portions are formed integrally.

According to another embodiment of the present invention, in a method of manufacturing a wafer lens stacked body in which two wafer lens assemblies each of which includes a wafer lens in which lens portions made of energy curable resin are formed on a glass substrate and a spacer which holds a predetermined distance between the wafer lens and another wafer lens are bonded with an adhesive made of energy curable resin and stacked on each other, the method of manufacturing a wafer lens stacked body is characterized by being provided with a process of arranging the energy curable resin between one ofthe wafer lens assemblies and another one of the wafer lens assemblies under a first atmosphere with a reduced pressure and pressing one of the one of the wafer lens assemblies and the another one of the wafer lens assemblies to another one while suctioning the one of the one of the wafer lens assemblies and the another one of the wafer lens assemblies; a process of changing the first atmosphere with the reduced pressure to a second atmosphere with a pressure higher than that of the first atmosphere in the state that the two wafer lens assemblies are in contact with the adhesive by the pressing process and conducting alignment between the one of the wafer lens assemblies and the another one of the wafer lens assemblies while suctioning the one of the one of the wafer lens assemblies and the another one of the wafer lens; and a process of applying energy to the energy curable resin so as to cure the energy curable resin.

It is desirable that the spacer of at least one of the two wafer lens assemblies and the lens portions are formed integrally.

### EFFECT OF THE INVENTION

According to the manufacturing method of the present invention, in the state that objects to be subjected to alignment are in contact with light curable resin, a first atmosphere with a reduced pressure is changed to a second atmosphere with a pressure higher than that in the first atmosphere, and the alignment is conducted under the resulting pressure state. Accordingly, the alignment is conducted on the pressure state that suctioning power is exerted while maintaining the state that air bubbles are not incorporated, the arrangement ofthe glass substrate and the molding die can be subjected to the alignment with high accuracy and it becomes possible to provide a wafer lens with high quality.

### BRIEF DESCRITIOIN OF THE DRAWINGS

Fig. 1 is a cross sectional view showing an outline structure of a wafer lens stacked body relating to a desirable embodiment of the present invention.
Fig 2 is an exploded perspective view showing an outline structure of a wafer lens assembly relating to a desirable embodiment of the present invention.
Fig. 3 is a diagram showing an outline structure of a wafer lens manufacturing apparatus relating to a desirable embodiment ofthe present invention.
Fig. 4 is a perspective view showing an outline structure of a sub master relating to a desirable embodiment of the present invention.
Fig. 5 is a perspective view showing an outline structure of a master (mother die) of the sub master of Fig. 4.
Fig. 6 is a block diagram showing roughly a control structure of the wafer lens manufacturing apparatus of Fig. 3.
Fig. 7 is an outline diagram showing a process that is a part of the manufacturing process of the wafer lens shown in Fig. 1 and Fig. 2 and drops resin on one surface of the glass substrate.
Fig. 8 is an outline diagram showing a process that is a part of the manufacturing process of the wafer lens shown in Fig. 1 and Fig. 2, presses the glass substrate onto a sub master, and irradiates light.
Fig. 9 is an outline diagram showing a process that is a part of the manufacturing process of the wafer lens shown in Fig. 1 and Fig. 2, and removes the sub master from a stamp holder.
Fig. 10 is an outline diagram showing a process that is a part of the manufacturing process of the wafer lens shown in Fig. 1 and Fig. 2, and drops resin on another surface of the glass substrate.
Fig. 11 is an outline diagram showing a process that is a part of the manufacturing process of the wafer lens shown in Fig. 1 and Fig. 2, and presses the glass substrate onto a sub master, and irradiates light
Fig. 12 is an outline diagram showing a process that is a part of the manufacturing process of the wafer lens shown in Fig. 1 and Fig. 2, and removes the sub master from a stamp holder.
Fig. 13 is an outline diagram showing a process that is a part of the manufacturing process of the wafer lens shown in Fig.1 and Fig. 2, and removes the glass substrate from the sub master.
Fig. 14 is an outline diagram showing a process that is a part of the manufacturing process of the wafer lens assembly shown in Fig. 1 and Fig. 2, and coats an adhesive onto a spacer.
Fig. 15 is an outline diagram showing a process that is a part of the manufacturing process of the wafer lens assembly shown in Fig. 1 and Fig. 2, and presses the spacer onto the wafer lens.
Fig. 16 is an outline diagram showing a process that is a part of the manufacturing process of the wafer lens assembly shown in Fig. 1 and Fig. 2, and coats an adhesive onto one of the wafer lens assemblies.
Fig. 17 is an outline diagram showing a process that is a part of the manufacturing process of the wafer lens assembly shown in Fig. 1 and Fig. 2, and presses one of the wafer lens assemblies onto another one of the wafer lens assemblies so as to adjust respective positions.
Fig. 18 is an outline diagram showing a modified example of a wafer lens stacked body (wafer lens assembly) shown in Fig. 1 and Fig. 2.

### EMBODIMENT FOR CARRYING OUT THE INVENTION

Hereafter, desirable embodiments of the present invention will be described with reference to drawings.

### [WAFER LENS, WAFER LENS ASSEMBLY, WAFER LENS STACKED BODY]

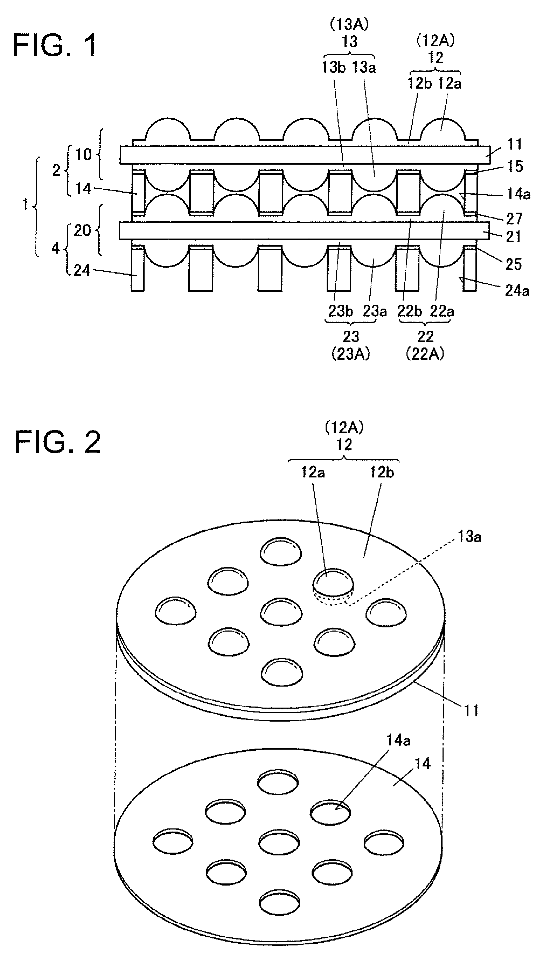

As shown in Fig. 1, a wafer lens stacked body 1 has a structure that the wafer lens assemblies 2 and 4 are stacked upward and downward, and the wafer lens assembly 2 and the wafer lens assembly 4 are bonded to each other with the adhesive bond 27.

The wafer lens assembly 2 includes a spacer 14 made of glass in order to hold a predetermined gap between a wafer lens 10 and a wafer lens 20.

The wafer lens 10 has a disk-shaped glass substrate 11, and resin portions 12 and 13 formed respectively on upper and lower surfaces of the glass substrate 11.

On the upper surface of the glass substrate 11, the resin portions 12 are formed. Each of the resin portions 12 includes a convex lens portion 12a constituting an optical surface and a non-lens portion 12b formed between the convex lens portions 12a.

On the lower surface of the glass substrate 11, the resin portions 13 are formed. As with the resin portions 12, each of the resin portions 13 include a convex lens portion 13a and a non-lens portion 13b.

Each of the convex lens portions 12a of the resin portions 12 faces vertically one of the convex lens portions 13a of the resin portions 13, so that the convex lens portions 12a and the convex lens portions 13a are arranged at respective positions to correspond to each other.

At the lower part of the non-lens portions 13b of the resin portion 13, a spacer 14 is disposed, and the non- lens portions 13b and the spacer 14 are bonded to each other with adhesive 15.

In the case where the wafer lens assembly 2 is disassembled, as shown in Fig. 2, on the glass substrate 11, the convex lens portions 12a and 13a are arranged at a matrix form. On the spacer 14, through-holes 14a are formers. Each of the through holes 14a is arranged at a location so as to face one of the convex lens portions 13a, so that the convex lens portions 13a come out respectively from the through holes 14a.

The wafer lens assembly 4 includes a spacer 24 made of glass in order to retain a predetermined gap between the wafer lens 20 and one of the other wafer lens assemblies.

The wafer lens 20 has the same structure as that of the wafer lens 10, and includes a disk-shaped glass substrate 21, and resin portions 22 and 23 formed respectively on upper and lower surfaces of the glass substrate 21.

Each of the resin portions 22 includes a convex lens portion 22a and a non-lens portion 22b, and each of the resin portions 23 includes a convex lens portion 23a and a non-lens portion 23b.

Each ofthe convex lens portions 22a ofthe resin portions 22 faces vertically one ofthe convex lens portions 23a of the resin portions 23, so that the convex lens portions 22a and the convex lens portions 23a are arranged at respective positions to correspond to each other.

At the lower part of the non-lens portions 23b of the resin portion 23, the spacer 24 is disposed, and the non- lens portions 23b and the spacer 14 are bonded to each other with adhesive 25.

Also in the case where the wafer lens assembly 4 is disassembled, as with the wafer lens assembly 2, on the glass substrate 21, the convex lens portions 22a and 23a are arranged at a matrix form. On the spacer 24, as with the spacer 14, through-holes 24a are formed. Each of the through holes 24a is arranged at a location so as to face one of the convex lens portions 23a.

On an optical surface of each of the convex lens portions 12a, 13a, 22a, and 23a, microscopic structures such as diffractive grooves and stepped portions may be formed.

The resin portions 12,13, 22, and 23 are composed of light curable resin 2A, 13A, 22A, and 23A. As such a light curable resin, for example, an acrylic resin, an allyl ester resin, and the like may be employed, and these resins can be hardened through reaction by radical polymerization. As other light curable resins, for example, an epoxy type resin may be employed, and such a resin can be cured through reaction by cationic polymerization.

In this embodiment, although the resin portions 12, 13, 22, and 23 are formed by the light curable resin (preferably, UV curable resin), the present invention should not be limited to this embodiment. That is, the resin portions may be formed by energy curable resins that are cured in receipt of energy (heat, and the like).

The adhesives 15, 25, and 27 are structured, as with the resin portions 12, 13, 22, and 23, by the light curable resin. Also, the adhesives 15, 25, and 27 may be formed by energy curable resins that are cured in receipt of energy (heat, and the like).

### [Wafer lens manufacturing apparatus]

Next, description will be given with regard to a wafer lens manufacturing apparatus 30 used at the time of manufacture of the wafer lens stacked body 1 (including the wafer lens assemblies 2 and 4 and wafer lenses 10 and 20).

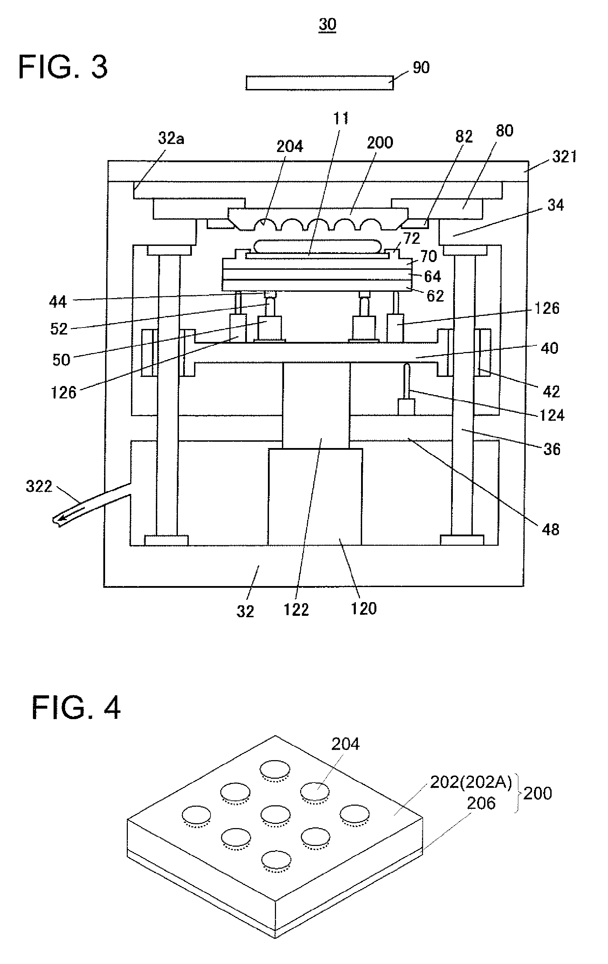

As shown in Fig. 3, the wafer lens manufacturing apparatus 30 includes a box-shaped base 32 having an opening at its upper part. An opening 32a is formed on the upper part ofthe base 32, and on this opening 32a, a plate-shaped lid portion 321 is formed so as to cover the opening 32a. The lid portion 321 has light transparency, and is preferably fonned by quartz glass, and the like. The inside of the base 32 that is closed with the lid portion 321 is made an enclosed space.

On the lower sidewall of the base 32, a pressure reducing mechanism 322 is disposed, and the actuation of the pressure reducing mechanism 322 is configured to reduce pressure in the inside of the base 32.

On the upper part of the base 32, a protrusion portion 34 which protrudes inwardly is formed Between the lower part of the base 32 and the protrusion portion 34, three guides 36 are made to stand with a predetermined interval between them (in Fig. 3, only two guides are illustrated). The guides 36 are attached respectively via flange portions to the base 32 and the protrusion portion 34. This structure enables the guides 36 to be attached with orthogonality to the base 32 and the protrusion portion 34. Between the guides 36, a stage 40 is disposed On the stage 40, slide guides 42 are formed, and the guides 36 are made to respectively pass through the slide guides 42.

On the base 32 and on the lower side of the stage 40, an up-and-down actuator 120 which performs up-and-down motions of the stage 40 is disposed. To the up-and-down actuator 120, a shaft 122 is linked.

On the base 32 and on the lower side of the stage 40, a supporting section 48 which protrudes inwardly is formed. On the supporting section 48, a height gauge 124 which measures the distance between the top face of the supporting section 48 and the bottom face of the stage 40 is disposed.

On the stage 40, three geared motors 50 are disposed with a predetermined interval between them (in Fig. 3, only two geared motors are illustrated). To each of the geared motors 50, a shaft 52 is linked. On the upper part of the geared motors 50, an XY stage 62 and a θ stage 64 are disposed in this order.

Between each of the geared motors 50 and the bottom face of the XY stage 62, a load cell 44 is disposed. With the weight of the XY stage 62 and the like, the tip of the shalt 52 comes in contact with the load cell 44. In the wafer lens manufacturing apparatus 30, the actuation of the geared motors 50 is configured to shift a bush in upward and downward directions, whereby the XY stage 62 and the like can be shifted in upward and downward directions.

Further, on the stage 40, three height gauges 126 which measure the distance between the top face of the stage 40 and the bottom face of the XY stage 62 are disposed with a predetermined interval between them.

The XY stage 62 is made movable on the XY plat surface (two-dimensional flat surface) on the load cells 44 and the height gauges 126. The θ stage 64 is made rotatable around its central portion made as an axis of rotation.

On the XY stage 62 and the θ stage 64, a vacuum chuck device 70 is installed. The vacuum chuck device 70 may be one of the well-known vacuum chuck devices, the suctioning face of the vacuum chuck device 70 is configured to absorb an object (glass substrate 11 and the like) with vacuum, and actuation and actuation cancellation of the vacuum chuck device 70 facilitate attachment and detachment of the object. On the suctioning face of the vacuum chuck device 70, a positioning member 72 which determiners the position ofthe object is disposed.

On an upper portion of the base 32, a stamp holder 80 is fixed. On the stamp holder 80, a light transmissive sub master 200 is adapted to be fixed. On end portions of the stamp holder 80, attached is an attaching and detaching mechanisms 82 (a pawl, a ring, and the like) that is configured to fit with the outer periphery edge of the sub master 200 and to hold the outer periphery edge detachably. Then, by the structure that the attaching and detaching mechanisms 82 holds mechanically the outer periphery edge ofthe sub master 200, the sub master 200 is secured to the stamp holder 80.

With regard to the attaching and detaching mechanisms 82 for the stamp holder 80 and the sub master 200, as long as a mechanism can hold the sub master 200 detachably for the stamp holder 80, the mechanism is not limited to the above construction.

Above the sub master 200, a light source 90 is provided. The lighting of the light source enables light to be irradiated toward the sub master 200.

As shown in Fig. 3 and Fig. 4, the sub master 20 is one example of molding dies, and mainly is composed of a molding section 202 and a base material 206. On the molding section 202, a plurality of cavities (concave portions) 204 is shaped in an array form. The configuration of the surface (molding surface) of each of the cavities 204 is made a negative configuration corresponding to each of convex lens portions 12a, 13a, 22a and 23a in the wafer lenses 10 and 20. In these drawings, the surface configuration is made concave in the form of an approximately hemisphere.

The molding section 202 is composed of a resin 202A. As the resin 202A, preferable is a resin with a good mold-release characteristic, especially preferable is a transparent resin. Such a resin is excellent in a point that a mold can be released without the application of a mold releasing agent As such a resin 202A, any one of a light curable resin, a thermo-hardening resin, and a thermoplastic resin may be employable.

The base material 206 is used as a lining material such that in the case where only the molding section 202 of the sub master 200 is poor in strength, the base material 206 pasted on the molding section 202 increase the strength of the sub master 200 so as to allow the sub master 200 to conduct molding repeatedly by any times.

The base material 206 may be structured with a different material from that of the molding section 202, or may be structured integrally with the same material with the molding section 202. In the case where the base material 206 is structured with a different material from that of the molding section 202, as the material of the base material 206, any materials having smoothness, such as quartz, silicon wafer, metal, glass, resin, ceramics, and the like may be employed. Here, the configuration to structure the base material 206 integrally with the same material with the molding section 202 means to constitute the sub master 200 substantially only with the molding section 202.

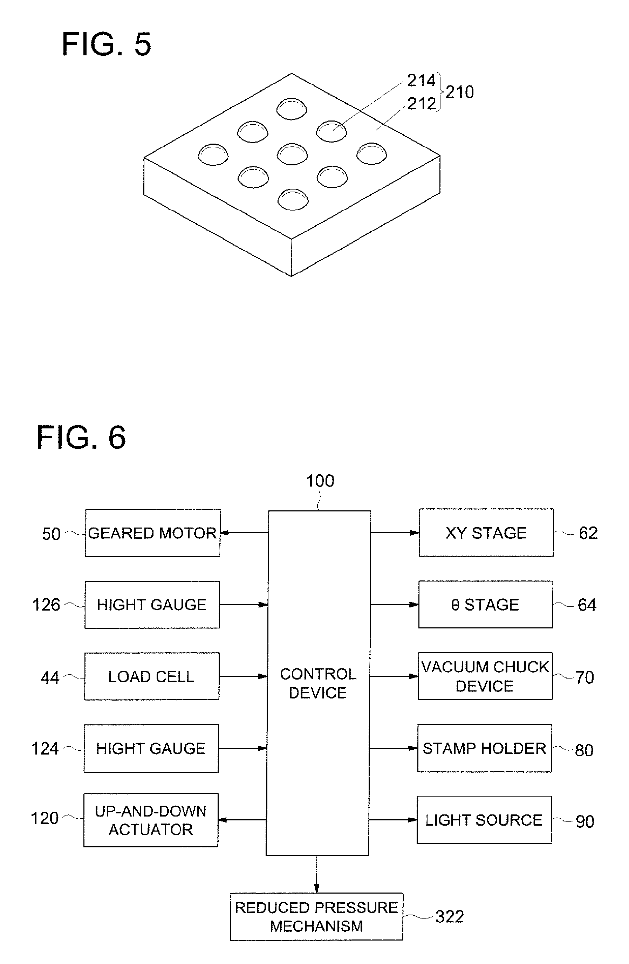

In the manufacture of the wafer lenses 10 and 20 (the molding of convex lens portions 12a, 13a, 22a, and 23a), the sub master 200 shown in Fig. 4 is mainly used. However, in addition, a master 210 shown in Fig. 5 is also used.

That is, the master 210 is a mother die used at the time of manufacture of the sub master 200, and the sub master 200 is a molding die used at the time of molding of the convex lens portions 12a, 13a, 22a, and 23a. The sub master 200 is used two or more times for mass-manufacturing the wafer lenses 10 and 20, and is different from the master 210 in terms of the purpose of use, frequency in use, and the like.

As shown in Fig. 5, in the master 210, a plurality of convex portions 214 are formed in an array form on a base section 212 shaped in a rectangular body. The convex portions 214 are portions corresponding to the convex lens portions 12a, 13a, 22a, and 23a of the wafer lenses 10 and 20, and are configured to protrude in the form of an approximately hemisphere. The configuration ofthe surface (molding surface) of each of the convex portions 214 is shaped in a positive configuration corresponding to the configuration of the optical surface of the convex lens portions 12a, 13 a, 22a, and 23a.

The outer configuration of the master 210 may be a rectangular in this way, or may be a circular.

As a material of the master 210, in the case where an optical surface configuration is created with mechanical processing such as cutting, grinding, and the like, metal or metallic glass may be employed.

As a classification of the material, iron-based materials and their alloys may be employed.

Examples of the iron-based materials include hot die steel, cold die steel, plastic die steel, highspeed tool steel, rolled steel for general structure, carbon steel for machine structure, chrome molybdenum steel, stainless steel and the like. In the above, examples of the plastic die steel include pre-hardened steel, quenched tempered steel, and aging treated steel. Examples ofthe pre-hardened steel include SC type steel, SCM type steel, and a SUS type steel More concretely, examples of the SC type steel include PXZ, examples of the SCM type steel include HPM2, HPM7, PX5, and IMPAX, and example of the SUS type steel include HPM38, HPM77, S-STAR, G-STAR, STAVAX, RAMAX-S, and PSL. Further, examples of the iron-based alloy are disclosed in Japanese Unexamined Patent Publication No. 2005-113161 and Japanese Unexamined Patent Publication No. 2005-206913.

As nonferrous alloys, mainly copper alloy, aluminum alloy, and zinc alloy are known well. Examples of the nonferrous alloys include the alloys disclosed in Japanese Unexamined Patent Publication No. 10-219373 and Japanese Unexamined Patent Publication No. 2000-176970. As materials of metallic glass, PdCuSi, PdCuSiNi, and the like are preferable, because their machinability is high so that the wear of a tool is little. Further, amorphous alloys, such as electroless or electrolytic nickel phosphorus plate are preferable, because their machinability in a diamond cutting is good. Such high machinable materials may be used to constitute an entire body of the master 10, or may cover only a surface of specifically an optical transfer surface by a method, such as plating and spattering.

As shown in Fig. 6, the up-and-down actuators 120, the height gauges 124, the height gauges 126, the load cells 44, the geared motors 50, the XY stage 62, the θ stage 64, the vacuum chuck device 70, the stamp holder, and the light source 90, the pressure reducing mechanism 322, and the like are connected to a control apparatus 100. The control apparatus 100 is configured to control the operations of these components.

Specifically, in this embodiment, the control apparatus 100 is configured to control the motion (up and down amount) of the up-and-down actuator 120 based on the output value of the height gauges 124, and to control the motion (rotation) of the geared motors 50 based on the output value of the load cells 44 and the height gauges 12b.

### [Method for manufacturing of wafer lenses]

Next, description will be given with regard to the method for manufacturing of wafer lenses by use of a wafer lens manufacturing apparatus 30.

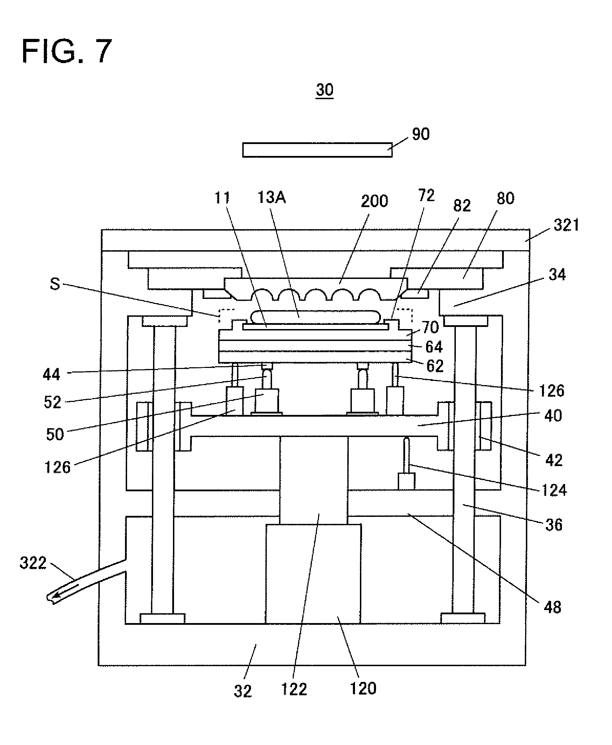

As shown in Fig. 7, the sub master 200 is secured to the stamp holder 80, and the glass substrate 11 is attached to the positioning member 72 of the vacuum chuck device 70. Then, the vacuum chuck device 70 is operated to absorb the glass substrate 11 with vacuum. Thereafter, a predetermined amount of resin 13A is dropped on the glass substrate 11 by a dispenser and the like which are not illustrated: (dispensing process).

At this time, the pressure reducing mechanism 322 is operated so as to reduce pressure in the inside of the base 32, and on this condition, the processing of the above-mentioned dispensing process is conducted. By conducting the processing of the dispensing process on the condition the pressure in the inside of the base 32 is reduced, air bubbles can be prevented from mixing in the resin 13A.

The "reduced reduction" in the dispensing process may be a reduced pressure to such an extent that air bubbles are prevented from mixing in the resin 13A. That is, if pressure is reduced continuously to become close unboundedly to vacuum, there is a possibility that air bubbles generate spontaneously in the inside of the resin 13A. Therefore, in the dispensing process, pressure is not required to be reduced to an extent that air bubbles are induced to generate spontaneously in the inside of the resin 13A.

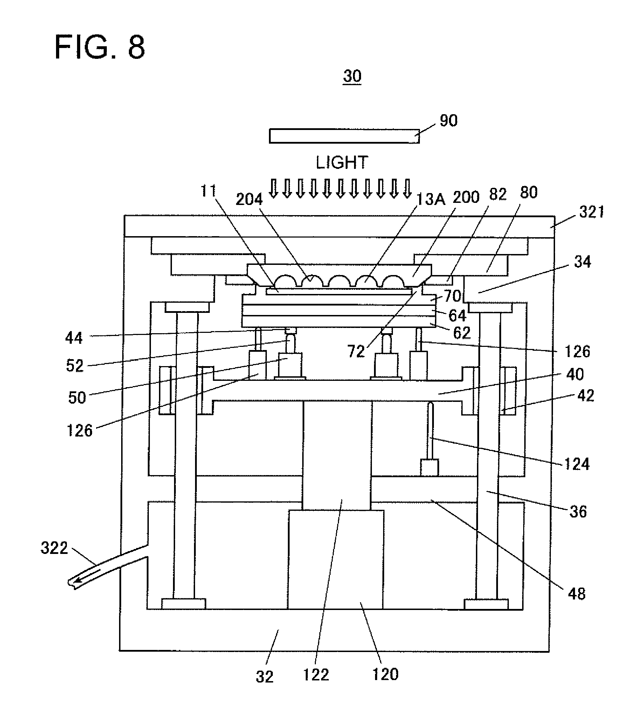

Thereafter, the inside of the base 32 is made to keep the reduced pressure atmosphere, as shown in Fig. 8, the glass substrate 11 is moved to a specified position relative to the sub master 200, and the glass substrate 11 is brought in pressure contact with the sub master 200: (imprinting process).

More in detail, the up-and-down actuator 120 is operated to extend a shaft 122 upward so as to move the stage 40 upward. In this case, the control apparatus 100 controls the operation of the up-and-down actuator 120 based on the output value of the height gauge 124 such that the stage 40 is moved upward to a position with a predetermined height.

In the wafer lens manufacturing apparatus 30, the position with the predetermined height of the stage 40 to be moved upward is set beforehand in the control apparatus 100. Accordingly, the control apparatus 100 operates the up-and-down actuator 120 until the vacuum chuck device 70 arrives at a reference position S (refer to Fig. 7), and when the vacuum chuck device 70 has arrived at the reference position S, the control apparatus 100 stop the operation of the up-and-down actuator 120.

As a result, the resin 13A spreads gradually in response to the pressing force of the glass substrate 11, and as shown in Fig. 8, the resin 13A is filled up in the cavities 204 of the sub master 200.

Then, the actuation of the pressure reducing mechanism 322 is cancelled so that the inside pressure ofthe base 32 is returned to an atmospheric pressure. On this condition, the position of the glass substrate 11 relative to the sub master 200 is adjusted: (alignment process).

More in detail, the geared motors 50 are operated so as to adjust the inclination of the suctioning face of the vacuum chuck device 70, to move the XY stage 62 on the XY flat surface, or to rotate the θ stage 64, whereby the arrangement ofthe glass substrate 11 relative to the sub master 200 is adjusted.

In the wafer lens manufacturing apparatus 30, the position of the glass substrate 11 relative to the sub master 200 is beforehand set up for the control device 100, so that the control device 100 controls the actuation of the geared motors 50 based on the output values ofthe height gauges 126, and controls the movement amount of the XY stage 62, and the rotation amount of the θ stage 64 separately from the above.

In this connection, in the alignment process, the inside pressure of the base 32 is not needed to be returned to an atmospheric pressure, and may be made higher than the reduced pressure atmosphere in the dispensing process. With this, the sufficient suctioning power can be acquired, and the alignment process can be conducted with high accuracy. However, by returning the inside pressure of the base 32 to an atmospheric pressure, a pressure difference between the inside pressure of the base 32 and the suctioning pressure of the vacuum chuck device 70 for the glass substrate 11 become larger. Accordingly, since the degree of vacuum suction by the vacuum chuck device 70 is raised, it may be more preferable.

Further, in this connection, the cancellation of the actuation of the pressure reducing mechanism 322 is not needed to be conducted after the resin 13A is filled up in the cavities 204 of the sub master 200, and it may be preferable to conduct the cancellation when a specified time elapses after the sub master is pressed such that the cavities 204 are covered with resin.

Thereafter, while the stage 40 is kept to be held at a location corresponding to the reference position S after the adjustment of alignment, the light source 90 is made to turn on to irradiate light toward the resin 13A through the light transmissive sub master 200 for a predetermined period of time, whereby the resin 13A is hardened (light irradiating process).

Here, when the resin 13A is hardened (during the hardening of the resin 13A or thereafter), if the stage 40 is kept being held at the position with the predetermined height, even if hardening shrinkage takes place in the resin 13A, the glass substrate 3 does not follow the shrinkage. As a result, there is a possibility that distortion may be caused inside the resin 13A, or the surface configuration of the cavities 24 may be transferred insufficiently to the resin 13A.

Then, in this embodiment, if the light source 90 is made to turn on for a predetermined time period so as to irradiate a predetermined amount of light to the resin 13A, the glass substrate 11 is subjected to pressure control in such a way that the pressing force of the glass substrate 11 to the sub master 200 is held at a predetermined pressure.

More in detail, the geared motors 50 are operated again so as to extend a shaft 52 upward and to move the XY stage 62, the θ stage 64, and the vacuum chuck device 70 upward. In this case, the control apparatus 100 controls the operation of the geared motors 50 based on the output value of the load cells 44 so that the stage 40 is moved upward while the pressing force of the stage 40 to the sub master 200 is being held at a predetermined pressure.

In the wafer lens manufacturing apparatus 30, the pressing force of each of the XY stage 62, the θ stage 64, and the vacuum chuck device 70 to the sub master 20 is set beforehand for the control apparatus 100 in such a way that the control apparatus 100 controls the operation of the geared motors 50 based on the output value received from the load cells 44 so that the pressing force of each of the XY stage 62, the θ stage 64, and the vacuum chuck device 70 to the sub master 20 is held at the predetermined pressure: (pressure control process).

Further, the control apparatus 100 also controls the XY stage 62 and the θ stage 64 based on the output value of the load cells 44 and the height gauges 126 so that the parallelism between the glass substrate 11 and the sub master 200, the equal load to the resin 13A, and a distance between the top face of the stage 40 and the XY stage 62 are held at a constant.

Thereafter, the light source 90 is made to switch off to stop irradiating light to the resin 13A. The light irradiation to the resin 13A may be stopped before the pressure control process.

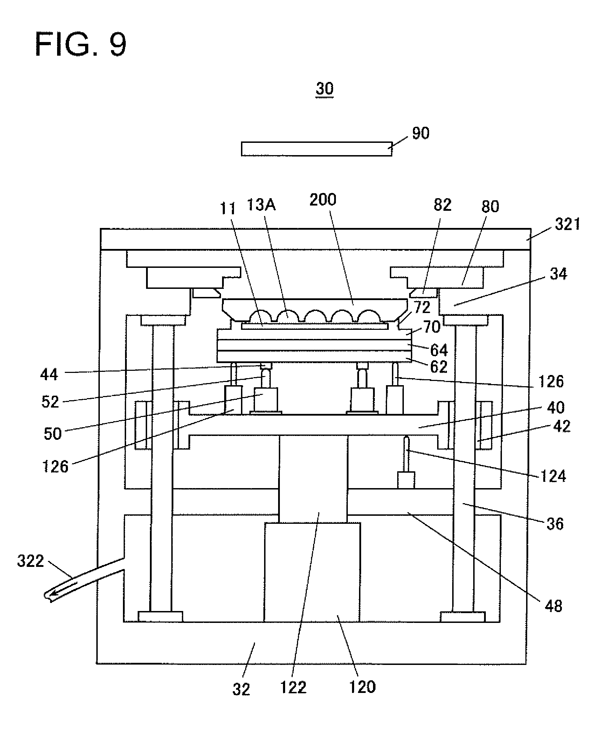

Thereafter, as shown in Fig. 9, on the condition that the sub master 200 is not released from the glass substrate 11, the securing by the attaching and detaching mechanism 82 is canceled, and the sub master 200 is removed from the stamp holder 80. Then, the bush of the up-and-down actuator 120 is moved downward, and the stage 40 is shifted below: (attachment/detachment and removing process).

Incidentally, from the dispensing process to the attachment/detachment and removing process, it may be structured that the glass substrate 11 is fixed to the stamp holder 80 side, and the sub master 200 is absorbed via vacuum by the vacuum chuck device 70.

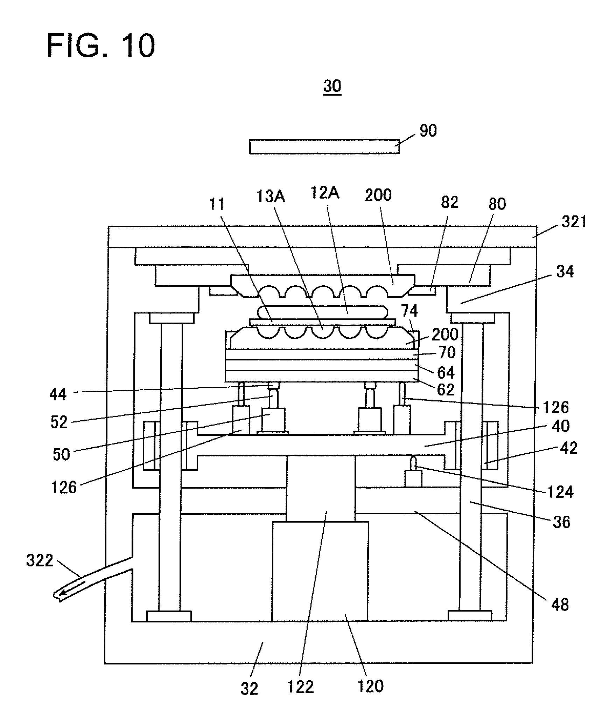

Thereafter, as shown in Fig. 10, a new sub master 200 is fixed to the stamp holder 80, and the glass substrate 11 on the condition that the sub master 200 is attached to it, is flipped upside down, and installed on the vacuum chuck device 70.

In this case, in place of the positioning member 72 for positioning the glass substrate 11, the positioning member 74 for positioning the sub master 200 is used. Then, again, the vacuum chuck device 70 is operated so as to absorb the sub master 200 via vacuum.

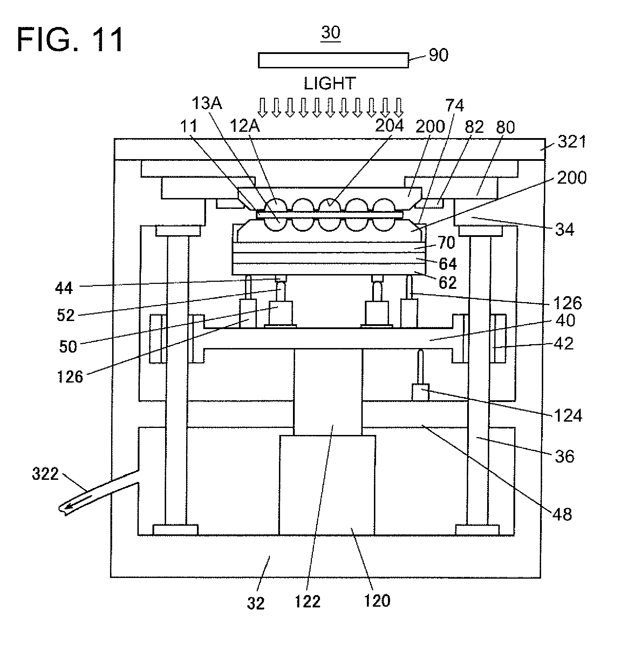

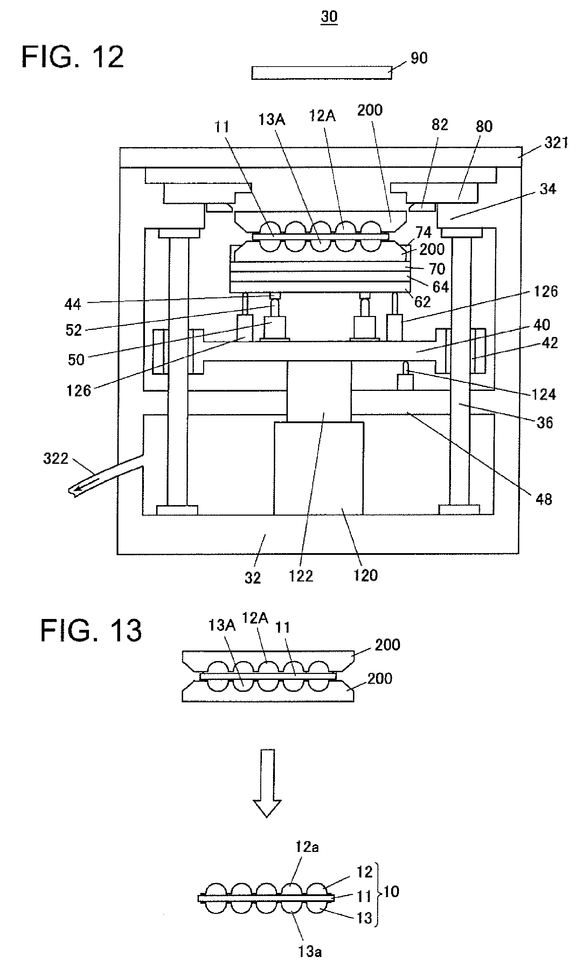

On this condition, a predetermined amount of the resin 12A is dropped on the glass substrate 11 by a dispenser (not illustrated) and the like, and then, as shown in Fig. 11 and Fig.12, the processes from the above-mentioned imprinting process to the attachment/detachment and removing process are conducted repeatedly.

Thereafter, as the operation of the vacuum chuck device 70 is cancelled, and as shown in Fig. 13, the glass substrate 11 on the condition that two sub masters 200 are attached to it, is taken out from the wafer lens manufacturing apparatus 30, and is subjected to postcure (heat) with an oven and the like, whereby the resins 12A and 13A are cured completely: (postcure process). Then, finally, the two sub masters 200 are released from the glass substrate 11: (release process).

As a result, the wafer lens 10 in which the convex lens portions 12a and 13a (resin portions 12 and 13) are formed on the upper face and lower face of the glass substrate 11 can be manufactured.

In this embodiment, although the resin is cured completely with treatment by the postcure process, the present invention is not needed to be limited to this treatment. That is, the treatment by the postcure process may be omitted. Also, after the resin is released from the sub master 200, a cure process may be conducted so as advance curing of the resin. In the latter case, since the curing process may be separated into two or more processes, a rapid change of the optical characteristic of the resin may be reduced.

According to the above-mentioned method for manufacturing the wafer lens 10, in the alignment process, since the processing is conducted under the atmosphere of atmospheric pressure that is higher than the reduced pressure atmosphere in the dispensing process and the imprinting process, the suctioning power for the glass substrate 11 by the vacuum chuck device 70 can be increased as compared with the dispensing process and the imprinting process. Therefore, it is possible to adjust arrangement of the glass substrate 11 and the sub master 200 while maintaining the suctioning power for the glass substrate 1] effectively, and it become possible to suppress the occurrence of positional deviation between the glass substrate 11 and the sub master 200, whereby formation accuracy (positional accuracy) of convex lens portions 12a and 13a for the glass substrate 11 can be enhanced.

In the case of manufacture of wafer lens 20, if the glass substrate 11 and the resins 12A and 13A are replaced with the glass substrate 21 and the resins 22A and 23A, the wafer lens 20 can be manufactured by the same method as the method for manufacturing the wafer lens 10.

### [Method for manufacturing a wafer lens assembly]

Next, the method for manufacturing the wafer lens assembly 2 will be described.

The wafer lens assembly 2 can also be manufactured by using the above-mentioned wafer lens manufacturing apparatus 30. In the drawings described hereafter, for the sake of expedience in drawings, the vacuum chuck device 70 and the stamp holder 80 in the wafer lens manufacturing apparatus 30 are specifically described.

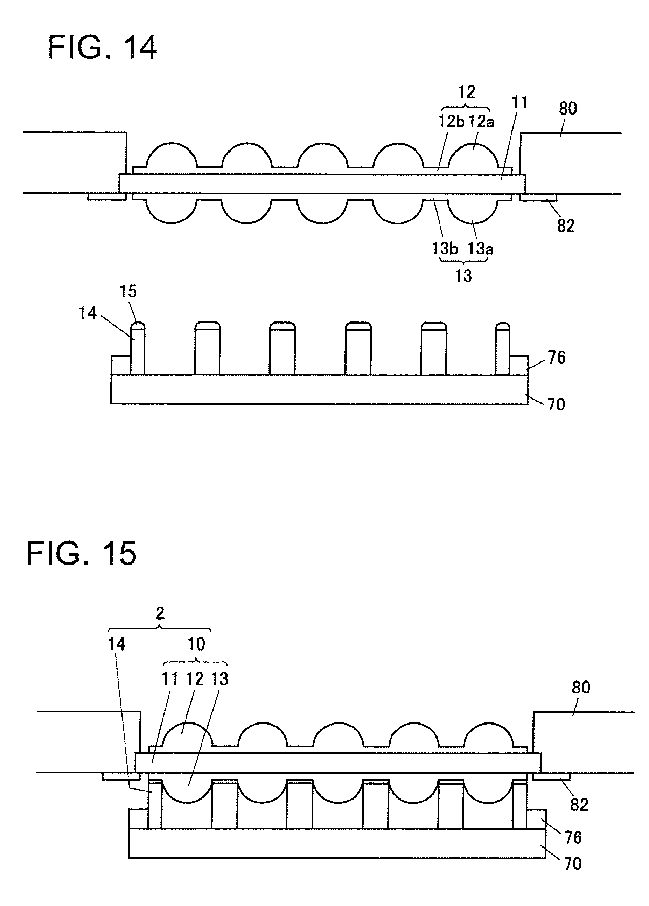

As shown in Fig. 14, the glass substrate 11 of the wafer lens 10 is fixed to the stamp holder 80, a spacer 14 is installed on the vacuum chuck device 70, and the vacuum chuck device 70 is operated so as to absorb the spacer 14 via vacuum. In this case, in place of the positioning member 72 for positioning the glass substrate 11 and the positioning member 74 for positioning the sub master 200, the positioning member 76 for positioning a spacer 14 is employed.

Then, a predetermined quantity ofthe adhesive 15 is coated on the spacer 14 by a dispenser (not shown) and the like: (adhesive coating process).

At this time, as with the case of Fig. 7, the pressure reducing mechanism 322 is operated so as to reduce pressure in the inside of the base 32, and on this condition, the adhesive 15 is coated on the spacer 14. With this, incorporation of air bubbles into the adhesive 15 can be prevented.

Subsequently, at the time of manufacture of the wafer lens 10, the processes from the imprinting process to the light irradiating process which are described above are conducted in the same way as that in the above so as to bond the spacer 14 to the wafer lens 10.

With the simple explanation, on the condition that the inside of the base 32 is made to maintain the reduced pressure atmosphere, as shown in Fig. 15, the spacer 14 is moved to a specified position relative to the wafer lens 10, and then the spacer 14 is brought in pressure contact with the wafer lens 10: (imprinting process).

Thereafter, the operation of the pressure reducing mechanism 322 is canceled so as to return the inside pressure of the base 32 to an atmospheric pressure, and the position of the spacer 14 relative to the wafer lens 10 is adjusted (alignment process). Also, in this alignment process, the inside pressure of the base 32 is not needed to be returned to an atmospheric pressure, and may be made higher than the reduced pressure atmosphere in the adhesive coating process. Further, in this case, the operation of the pressure reducing mechanism 322 may be canceled at the stage that the non-lens portions 13b of the wafer lens 10 come in contact with the adhesive 15 on the spacer 14. The reason why is that with this, even if the pressure is released, incorporation of air bubbles into the bond 15 due to the released pressure can be prevented.

Subsequently, the light source 90 is made to turn on such that light is irradiated to the adhesive 15 for a predetermined time through the wafer lens 10, whereby the adhesive bond 15 is cured (light irradiating process).

Also, according to the above-mentioned method for manufacturing the wafer lens assembly 2, in the alignment process, since the processing is conducted under the atmosphere that pressure is higher than the reduced pressure atmosphere in the adhesive coating process and the imprinting process, the suctioning power for the spacer 14 by the vacuum chuck device 70 can be increased as compared with the adhesive coating process and the imprinting process, and it become possible to suppress the occurrence of positional deviation between the spacer 14 and the wafer lens 10.

Incidentally, also in the manufacturing process of the wafer lens assembly 2, it may be structured that the spacer 14 is fixed to the stamp holder 80 side, and the wafer lens 10 is absorbed via vacuum by the vacuum chuck device 70.

In the case of manufacture of the wafer lens assembly 4, if the wafer lens 10 and the spacer 14 are replaced with the wafer lens 20 and the spacer 24, the wafer lens assembly 4 can be manufactured by the same method as the method for manufacturing the wafer lens assembly 2.

### [Method for manufacturing a wafer lens stacked body]

Next, the method for manufacturing the wafer lens stacked body 1 will be described.

The wafer lens stacked body 1 can also be manufactured by using the above-mentioned wafer lens manufacturing apparatus 30. In the drawings described hereafter, for the sake of expedience in drawings, the vacuum chuck device 70 and the stamp holder 80 in the wafer lens manufacturing apparatus 30 are specifically described.

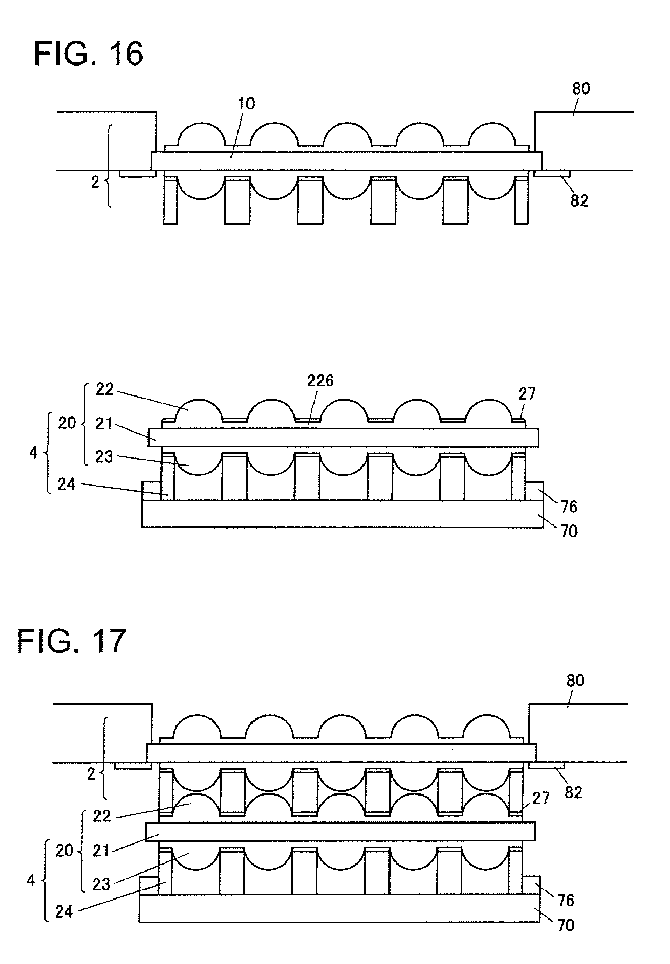

As shown in Fig. 16, the glass substrate 11 of the wafer lens assembly 2 is fixed to the stamp holder 80, a spacer 24 of the wafer lens assembly 4 is installed on the vacuum chuck device 70, and the vacuum chuck device 70 is operated so as to absorb the spacer 24 via vacuum

Then, a predetermined quantity ofthe adhesive 27 is coated on the non-lens portion 22b of the wafer lens assembly 4 by a dispenser (not shown) and the like: (adhesive coating process).

At this time, as with the case of Fig. 7, the pressure reducing mechanism 322 is operated so as to reduce pressure in the inside of the base 32, and on this condition, the adhesive 27 is coated on the non-lens portion 22b. With this, incorporation of air bubbles into the adhesive 27 can be prevented.

Subsequently, at the time of manufacture of the wafer lens 10, the processes from the imprinting process to the light irradiating process which are described above are conducted in the same way as that in the above so as to bond the wafer lens assembly 4 to the wafer lens assembly 2.

With the simple explanation, on the condition that the inside ofthe base 32 is made to maintain the reduced pressure atmosphere, as shown in Fig. 17, the wafer lens assembly 4 is moved to a specified position relative to the wafer lens assembly 2, and then the wafer lens assembly 4 is brought in pressure contact with t the wafer lens assembly 2: (imprinting process).

Thereafter, the operation of the pressure reducing mechanism 322 is canceled so as to return the inside pressure of the base 32 to an atmospheric pressure, and the position of the wafer lens assembly 4 relative to the wafer lens assembly 2 is adjusted (alignment process). Also, in this alignment process, the inside pressure ofthe base 32 is not needed to be returned to an atmospheric pressure, and may be made higher than the reduced pressure atmosphere in the adhesive coating process. Further, in this case, the operation ofthe pressure reducing mechanism 322 may be canceled at the stage that the spacer 14 of the wafer lens assembly 2 comes in contact with the adhesive 15 on the wafer lens assembly 4. The reason why is that with this, even if the pressure is released, incorporation of air bubbles into the bond 27 due to the released pressure can be prevented.

Subsequently, the light source 90 is made to turn on such that light is irradiated to the adhesive 27 for a predetermined time through the wafer lens assembly 2, whereby the adhesive bond 15 is cured (light irradiating process).

Also, according to the above-mentioned method for manufacturing the wafer lens stacked body 1, in the alignment process, since the processing is conducted under the atmosphere of atmospheric pressure that is higher than the reduced pressure atmosphere in the adhesive coating process and the imprinting process, the suctioning power for the wafer lens assembly 4 by the vacuum chuck device 70 can be increased as compared with the adhesive coating process and the imprinting process, and it become possible to suppress the occurrence of positional deviation between the wafer lens assembly 2 and the wafer lens assembly 4.

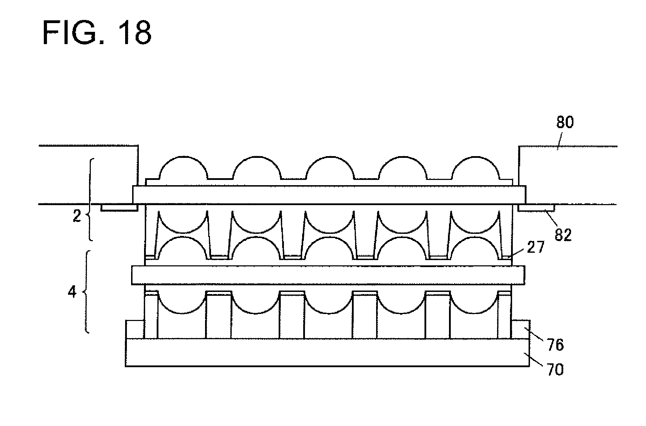

Incidentally, in this embodiment, as shown in Fig. 1, the wafer lens assembly 2 is constituted by the wafer lens 10 and the spacer 14. However, as shown in Fig. 18, the non-lens portion 13b in the resin portion 13 and spacer 14 may be formed integrally.

Also in this case, the wafer lens assembly 2 and the wafer lens assembly 4 can be bonded with each other by the same method with the method for manufacturing the above-mentioned wafer lens stacked body 1.

Moreover, in this embodiment the case where the wafer lens assembly 2 and the wafer lens assembly 4 are stacked is described as one example. However, it may be structured that one of the wafer lens assembly 2 and the wafer lens assembly 4 is made simply a wafer (glass substrate). For example, the wafer lens assembly 4 may be constituted by only the glass substrate 21 without being provided with the resin portions 22 and the spacer 24.

Furthermore, in this embodiment, each of the adhesive coating process and the dispensing process is conducted under the reduced pressure atmosphere in the same apparatus. However, the present invention is not needed to be limited to this. For example, such the processes may be conducted within a reduced pressure atmosphere in respective different apparatus, and may be conducted in the state released to atmosphere in respective different apparatus.

### EXPLANATION OF REFERENCE SYMBOLS

- 1: Wafer Lens Stacked Body
- 2 and 4: Wafer lens assembly,
- 10: Wafer Lens
- 11: Glass Substrate
- 12 and 13: Resin portion
- 12a and 13a: Convex lens portion
- 12b and 13b: Non-lens portion
- 12A and 13A: Light curable resin
- 14: Spacer
- 14a: Through-hole
- 15: Adhesive
- 21: Glass Substrate
- 22 and 23: Resin portion
- 22a and 23a: Convex lens portion
- 22b and 23b: Non-lens portion
- 22A and 23A: Light curable resin
- 24: Spacer
- 24a: Through-hole
- 25 and 27: Adhesive
- 30: Wafer lens manufacturing apparatus
- 32: Base
- 32a: Opening
- 34: Protruding portion
- 36: Guide
- 40: Stage
- 44: Load Cell
- 48: Supporting Section
- 50: Geared Motor
- 52: Shaft
- 62: XY Stage
- 64: Theta Stage
- 70: Vacuum chuck device
- 72,74, and 76: Positioning member
- 80: Stamp Holder
- 82: Attaching and detaching mechanism
- 90: light source
- 100: Control device
- 120: Up-and-down actuator
- 122: Shaft
- 124,126: Height gauge
- 200: Sub master
- 202: Molding Section
- 204: Cavity
- 206: Base material
- 210: Master
- 212: Base portion
- 214: Convex portion
- 321: Lid Portion
- 322: Reduced pressure mechanism

## Claims

1. In a method of manufacturing a wafer lens in which lens portions made of energy curable resin are formed on a glass substrate, the method of manufacturing a wafer lens is **characterized by** being provided with a process of arranging the energy curable resin between the glass substrate and the molding die under a first reduced-pressure atmosphere with a reduced pressure and pressing one of the glass substrate and the molding die to another one while suctioning the one of the glass substrate and the molding die; a process of changing the first atmosphere with a reduced pressure to a second atmosphere with a pressure higher than that of the first atmosphere in the state that the pressed one of the glass substrate and the molding die by the pressing process is in contact with the energy curable resin and conducting alignment between the glass substrate and the molding die while suctioning the one of the glass substrate and the molding die; and a process of applying energy to the energy curable resin so as to cure the energy curable resin.

2. In a method of manufacturing a wafer lens assembly in which a wafer lens in which lens portions made of energy curable resin are formed on a glass substrate is bonded with an adhesive made of energy curable resin to a spacer which holds a predetermined distance between the wafer lens and another wafer lens, the method of manufacturing a wafer lens assembly is **characterized by** being provided with a process of arranging the energy curable resin between the wafer lens and the spacer under a first atmosphere with a reduced pressure and pressing one of the wafer lens and the spacer to another one while sectioning the one of the wafer lens and the spacer, a process of changing the first atmosphere with the reduced pressure to a second atmosphere with a pressure higher than that of the first atmosphere in the state that the wafer lens and the spacer are in contact with the adhesive by the pressing process and conducting alignment between the wafer lens and the spacer while suctioning the one of the wafer lens and the spacer; and a process of applying energy to the energy curable resin so as to cure the energy curable resin.

3. In a method of manufacturing a wafer lens stacked body in which a wafer lens assembly which includes a wafer lens in which lens portions made of energy curable resin are formed on a glass substrate and a spacer which holds a predetermined distance between the wafer lens and another wafer lens is bonded with an adhesive made of energy curable resin and stacked on the another wafer lens across the spacer, the method of manufacturing a wafer lens stacked body is **characterized by** being provided with a process of arranging the energy curable resin between the wafer lens assembly and the another wafer under a first atmosphere with a reduced pressure and pressing one of the wafer lens assembly and the another wafer to another one while suctioning the one of the wafer lens assembly and the another wafer; a process of changing the first atmosphere with the reduced pressure to a second atmosphere with a pressure higher than that of the first atmosphere in the state that the spacer and the another wafer are in contact with the adhesive by the pressing process and conducting alignment between the wafer lens assembly and the another wafer while suctioning the one of the wafer lens assembly and the another wafer; and a process of applying energy to the energy curable resin so as to cure the energy curable resin.

4. The method of manufacturing a wafer lens stacked body, described in claim 3, is **characterized in that** the spacer and the lens portions are formed integrally.

5. In a method of manufacturing a wafer lens stacked body in which two wafer lens assemblies each of which includes a wafer lens in which lens portions made of energy curable resin are formed on a glass substrate and a spacer which holds a predetermined distance between the wafer lens and another wafer lens are bonded with an adhesive made of energy curable resin and stacked on each other, the method of manufacturing a wafer lens stacked body is **characterized by** being provided with a process of arranging the energy curable resin between one of the wafer lens assemblies and another one of the wafer lens assemblies under a first atmosphere with a reduced pressure and pressing one of the one of the wafer lens assemblies and the another one of the wafer lens assemblies to another one while suctioning the one of the one of the wafer lens assemblies and the another one of the wafer lens assemblies; a process of changing the first atmosphere with the reduced pressure to a second atmosphere with a pressure higher than that of the first atmosphere in the state that the two wafer lens assemblies are in contact with the adhesive by the pressing process and conducting alignment between the one of the wafer lens assemblies and the another one of the wafer lens assemblies while suctioning the one of the one of the wafer lens assemblies and the another one of the wafer lens; and a process of applying energy to the energy curable resin so as to cure the energy curable resin.

6. The method of manufacturing a wafer lens stacked body, described in claim 5, is **characterized in that** the spacer of at least one of the two wafer lens assemblies and the lens portions are formed integrally.

7. A wafer lens manufacturing apparatus is **characterized by** conducting manufacture of a wafer lens described in claim 1.

8. A wafer lens assembly manufacturing apparatus is **characterized by** conducting manufacture of a wafer lens assembly described in claim 2.

9. A wafer lens stacked body manufacturing apparatus is **characterized by** conducting manufacture of a wafer lens stacked body described in any one of claims 3 to 6.
